# EUROPÄISCHE PATENTSCHRIFT

(11) **EP 3 152 468 B1**
(45) Veröffentlichungstag und Bekanntmachung des Hinweises auf die Patenterteilung: **11.04.2018**
(21) Anmeldenummer: 15717915.1
(22) Anmeldetag: 27.04.2015
(51) Int. Cl.: F16H 59/02, F16H 61/22, F16H 61/24

(54) **BETÄTIGUNGSEINRICHTUNG ZUR AUSWAHL VON GANGSTUFEN FÜR EIN GANGWECHSELGETRIEBE SOWIE VERFAHREN ZUM SPERREN EINER BETÄTIGUNGSEINRICHTUNG**
ACTUATING APPARATUS FOR SELECTING GEARS FOR A GEAR CHANGE TRANSMISSION AND METHOD FOR BLOCKING AN ACTUATING APPARATUS
DISPOSITIF D'ACTIONNEMENT POUR LA SÉLECTION DE RAPPORTS D'UN ENGRENAGE DE CHANGEMENT DE RAPPORT AINSI QUE PROCÉDÉ DE BLOCAGE D'UN DISPOSITIF D'ACTIONNEMENT

(30) Priorität: 06.06.2014 DE 102014210827
(43) Veröffentlichungstag der Anmeldung: 12.04.2017
(73) Patentinhaber: ZF Friedrichshafen AG, 88046 Friedrichshafen (DE)
(72) Erfinder: FRIBUS, Vitali, 49413 Dinklage (DE); STRASSBURG, Karsten, 30167 Hannover (DE); RAKE, Ludger, 49439 Steinfeld (DE)
(86) Internationale Anmeldenummer: PCT/EP2015/059019
(87) Internationale Veröffentlichungsnummer: WO 2015/185281

(56) Entgegenhaltungen:
- EP-A2- 2 792 910
- DE-A1-102007 015 375
- DE-A1-102007 058 850
- JP-A- H1 178 576

## Beschreibung

Die vorliegende Erfindung bezieht sich auf eine Betätigungseinrichtung zur Auswahl von Gangstufen für ein Gangwechselgetriebe sowie auf ein Verfahren zum Sperren einer Betätigungseinrichtung.

Gangwechselgetriebe von Kraftfahrzeugen werden üblicherweise mittels einer im Griffbereich des Fahrers angeordneten Betätigungseinrichtung gesteuert beziehungsweise geschaltet. Regelmäßig kommen hierzu Betätigungselemente wie Schalthebel oder Wählhebel zum Einsatz, die beispielsweise zwischen den Frontsitzen des Kraftfahrzeugs angeordnet sind. Automatikgetriebe, bei welchen das Getriebe mit der Shift-by-Wire-Technik geschalten wird, gelten als bekannt.

Die DE 10 2007 015 375 A1 offenbart eine Betätigungseinrichtung zur Auswahl von Schaltstufen eines Shift-by-Wire-Gangwechselgetriebes mit einer Wählhebelrückführung. Eine Betätigungseinrichtung gem. dem Oberbegriff des Anspruchs 1 wird in der JP-A-H11 78576 offenbart. Es ist Aufgabe der vorliegenden Erfindung eine verbesserte Betätigungseinrichtung zur Auswahl von Gangstufen für ein Gangwechselgetriebe sowie ein entsprechendes Verfahren zum Sperren einer solchen Betätigungseinrichtung zu schaffen.
Die Aufgabe wird durch eine Betätigungseinrichtung gemäß Anspruch 1 und einem Verfahren gemäß Anspruch 13 gelöst.
Vorteilhafte Ausgestaltungen ergeben sich aus den abhängigen Ansprüche. Ein Wählhebel einer Betätigungseinrichtung zur Auswahl von Gangstufen kann in einer Hauptgasse beziehungsweise Automatikgasse oder alternativ in einer Tippgasse über eine Sperrkontur gesperrt werden. Die Sperrkontur schafft eine mechanische Sperre, die über einen Aktor aktiviert werden kann. Vorteilhaft kann im Zusammenspiel mit einer hier nicht beschriebenen weiteren Einrichtung eine sogenannte Auto-P-Funktion kostengünstig realisiert werden. Wenn der Wählhebel sich in der Hauptgasse befindet, ist auch bei aktivierter Sperrkontur ein Schalten in der Hauptgasse möglich. Gleiches gilt für eine Position in der Tippgasse und ein Schalten innerhalb der Tippgasse. Vorteilhaft kann bei Aufbringen einer zusätzlichen Querkraft der Wählhebel auch bei aktivierter Sperrkontur von der Tippgasse in die Hauptgasse bewegt werden.

Fahrzeuge, insbesondere Kraftfahrzeuge, können mit einem Gangwechselgetriebe ausgestattet sein. Gangwechselgetriebe können auch bei stationären Kraftmaschinen zur Kraftübertragung eingesetzt werden. Bei einem Fahrzeug mit einem Gangwechselgetriebe kann es sich beispielsweise um ein Straßenfahrzeug wie einen Personenkraftwagen, einen Lastkraftwagen, eine Zugmaschine, eine Arbeitsmaschine oder ein Krad handeln, oder um ein Luftfahrzeug, ein Schiff oder ein Schienenfahrzeug handeln. Bei dem Gangwechselgetriebe kann es sich somit um ein Getriebe eines Fahrzeugs handeln. Die Betätigungseinrichtung kann eine Rastiereinrichtung mit einem Rastbolzen aufweisen, dessen Rastbolzenspitze federbelastet in einer Rastkulisse gleitet. Dabei kann der Wählhebel in Übereinstimmung mit dem traditionellen Bedienkonzept als multistabiles Bedienelement mit jeweils stabilen Wählhebelstellungen ausgebildet sein. In der Tippgasse kann der Wählhebel als monostabiles Betätigungselement ausgebildet sein, um nach jeder Betätigung stets wieder in eine vordefinierte Mittelstellung zurückzukehren. Unter einer Tippgasse kann ebenso wie unter einer Hauptgasse eine Rastierlaufbahn verstanden werden. Die Rastiereinrichtung kann anordenbar, ausgeformt und ausgebildet sein, um den Wählhebel zu führen, gegen den Wählhebel zu drücken und/oder einen Widerstand beziehungsweise eine sensorische, insbesondere haptische, Rückkopplung bezüglich einer Bewegung oder Schaltstellung desselben bei Schaltvorgängen zu ermöglichen. Der Wählhebel kann beispielsweise von einem Fahrer des Fahrzeugs mit der Hand bedient werden, um unterschiedliche Fahrstufen beziehungsweise Gänge des Automatikgetriebes einzustellen. Beispielsweise kann die Bewegung des Bedienelements zwischen Schaltstellungen beziehungsweise Positionen P für Parken, N für Leerlauf, R für Rückwärtsfahren und D für Fahren sowie von D aus in eine Tippgasse erfolgen. Die Tippgasse kann auch als manuelle Gasse beziehungsweise Schaltgasse bezeichnet werden. Wenn der Wählhebel der Betätigungseinrichtung sich in der Hauptgasse befindet, können beispielsweise die (Automatik-) Schaltstellungen P, N, R, D ausgewählt werden. Bei einem Automatikgetriebe mit Shift-by-Wire-Betätigung kann es sich um ein Getriebe mit einer elektrischen Betätigung handeln, wobei keine mechanische Kopplung zwischen der Betätigungseinrichtung beispielsweise in der Fahrgastzelle und dem Getriebe beispielsweise im Motorraum besteht. So kann eine Übertragung von Schaltbefehlen von der Betätigungseinrichtung zum Getriebe ausschließlich mittels elektrischer oder elektronischer Signale und anschließend beispielsweise elektrohydraulischer Umsetzung der Schaltbefehle erfolgen. Wenn es sich bei dem Getriebe um ein Automatikgetriebe oder Automatgetriebe handelt, so kann dieses eine sogenannte Auto-P-Funktion aufweisen, die dafür sorgt, dass bei Vorliegen bestimmter Bedingungen wie beispielsweise beim Verlassen des Fahrzeugs stets die Parksperre im Getriebe eingelegt werden kann, um etwa ein Wegrollen eines unbeaufsichtigten Fahrzeugs zu unterbinden. So kann die Auto-P-Funktion dafür sorgen, dass in einer bestimmten Situation eine Parksperre im Getriebe eingelegt wird, unabhängig von einer tatsächlich am Wählhebel angewählten Fahrstufe. In einer anderen Fahrsituation kann ein in der Tippgasse befindlicher Wählhebel automatisch in die Hauptgasse bewegt werden, um der Fahrsituation gerecht zu werden beziehungsweise um anschließend eine Sicherheitsfunktion aktivieren zu können. So kann eine Diskrepanz zwischen einer Wählhebelstellung und einem Getriebezustand ausgeglichen werden, um somit unerwünschte Fehlbedienung oder fehl Schlüsse durch einen Fahrer zu vermeiden.

Die Sperreinrichtung kann ausgebildet sein, den Wählhebel innerhalb der Hauptgasse, der Tippgasse oder der Verbindungsgasse zu führen oder in einer Bewegung zu sperren. Dabei kann ein Zustand des Aktors der Sperreinrichtung eine Funktion der Sperreinrichtung beeinflussen. Der Aktor kann den Sperrbolzen je nach Ausführungsform beispielsweise elektrisch, elektropneumatisch oder elektrohydraulisch bewegen. Dabei kann der Sperrbolzen in die Sperrkulisse eingreifen und von der Sperrkulisse gehalten oder geführt werden. Insbesondere kann der Sperrbolzen in eine Vertiefung beziehungsweise Sperrvertiefung der Sperrkulisse eingreifen. Bei der Sperrevertiefung kann es sich um eine Bohrung, eine Aussparung, eine Nut oder eine andere Art einer Vertiefung in der Sperrkulisse handeln. Unter der Feder kann allgemein ein sich elastisch rückstellendes Federelement verstanden werden. Dabei kann das Federelement mechanisch, elektro-motorisch, elektro-magnetisch oder pneumatisch eine Federkraft beziehungsweise eine Haltekraft ausüben. Die Feder kann auf ein Element der Sperreinrichtung wirken und somit eine Haltekraft auf die Sperreinrichtung ausüben. Die Haltekraft kann bewirken, dass die Sperreinrichtung in einer Position gehalten wird, solange keine die Haltekraft übersteigende Kraft auf ein Element der Betätigungseinrichtung ausgeübt wird.

Günstig ist es auch, wenn in einer Ausführungsform der Aktor als ein Elektromagnet ausgebildet ist. Der Sperrbolzen kann von dem Aktor aktiv zwischen zwei Endpositionen bewegt werden. So kann der Aktor durch ein einfaches elektrisches Steuersignal aktiviert werden.

Ferner kann die Sperrkulisse eine weitere Sperrvertiefung aufweisen. Dabei kann eine in Richtung der Sperrvertiefung angeordnete Seitenwand der weiteren Sperrvertiefung zumindest teilweise schräg zu einer Bewegungsrichtung des Sperrbolzens ausgerichtet sein. So kann die in Richtung der Sperrvertiefung angeordnete Seitenwand der weiteren Sperrvertiefung zumindest einen Abschnitt aufweisen, der einen Winkel zwischen 30° und 60° zur Bewegungsrichtung des Sperrbolzens aufweist. Die schräge Seitenwand kann stetig ausgebildet sein, das heißt, das die schräge Seitenwand in einer Ausführungsform keine Knickstellen aufweisen kann. Vorteilhaft kann der Sperrbolzen, wenn der Wählhebel sich in der Tippgasse befindet, in die weitere Sperrvertiefung bewegt werden, um den Wählhebel in der Tippgasse zu halten. Weiterhin kann der Wählhebel bei Aufbringen einer Kraft, die die Differenz zwischen der durch den Sperrbolzen aufgebrachten Haltekraft und der Rückstellkraft der Rastiereinrichtung übersteigt, von der Tippgasse in die Hauptgasse bewegt werden.

Die Sperrvertiefung der Sperrkulisse kann zumindest abschnittsweise eine zur Bewegungsrichtung des Sperrbolzens im Wesentlichen parallel ausgerichtete Seitenwand aufweisen. So kann die Seitenwand in einem Toleranzbereich parallel zur Bewegungsrichtung des Sperrbolzens ausgerichtet sein. Dabei kann der Toleranzbereich bis zu 10°, bis zu 30° oder bis zu 45° betragen. Die zumindest abschnittsweise im Wesentlichen parallel ausgerichtete Seitenwand kann in Richtung der weiteren Sperrvertiefung angeordnet sein. Der Sperrbolzen kann in einem Abschnitt eine abgerundete Form aufweisen. Der Sperrbolzen kann eine Fase aufweisen. Vorteilhaft kann der Sperrbolzen den Wählhebel in der Hauptgasse halten, wenn er in die Sperrvertiefung der Sperrkulisse eingreift.

Die Sperrvertiefung kann eine Längserstreckung aufweisen. Dabei kann die Sperrvertiefung in einem Toleranzbereich parallel zur Hauptgasse ausgerichtet sein. Die weitere Sperrvertiefung kann eine Längserstreckung aufweisen. Die weitere Sperrvertiefung kann in einem Toleranzbereich parallel zur Tippgasse ausgerichtet sein. Dabei kann der Toleranzbereich plus/minus 10° umfassen. Alternativ kann der Toleranzbereich bis zu 90° umfassen. Insbesondere kann die Längserstreckung eine größere Länge als Breite der Sperrvertiefung und/oder der weiteren Sperrvertiefung aufweisen.

Der Sperrbolzen kann in einer Ausführungsform einen Sperrpin umfassen. Unter einem Sperrpin kann ein Bolzen verstanden werden. Der Sperrpin kann in dem Sperrbolzen in Bewegungsrichtung des Sperrbolzens innerhalb des Aktors bewegbar angeordnet sein. Die Feder kann ausgebildet sein, den Sperrpin in Bewegungsrichtung des Sperrbolzens in Richtung der Sperrkulisse zu drücken. Der Sperrbolzen kann einen Sperrpin umfassen, der in einem in die Sperrkulisse eingreifbaren Teilbereich eine abgerundete und/oder runde Form aufweist.

In einem ersten Zustand des Aktors kann der Wählhebel in der Hauptgasse bewegbar sein. In dem ersten Zustand des Aktors kann der Wählhebel in der Tippgasse bewegbar sein. Weiterhin kann in dem ersten Zustand des Aktors der Wählhebel zwischen der Hauptgasse und der Tippgasse in einer Wechselgasse bewegbar sein. So kann beispielsweise in dem ersten Zustand der Aktor in der Hauptgasse, der Tippgasse und der Wechselgasse bewegbar sein. In einem zweiten Zustand des Aktors kann der Wählhebel in der Hauptgasse bewegbar sein. In dem zweiten Zustand des Aktors kann der Wählhebel in der Tippgasse bewegbar sein. In dem zweiten Zustand des Aktors kann der Wählhebel von der Tippgasse in die Hauptgasse bewegbar sein. Vorteilhaft kann durch den Zustand des Aktors eine Bewegungsmöglichkeit beziehungsweise mögliche Bewegungsrichtungen des Wählhebels beeinflusst werden.

In einer Ausführungsform kann die Feder als eine mit dem Sperrbolzen wirkverbundene Feder ausgebildet sein. Dabei kann die Feder um einen Drehpunkt drehbar gelagert sein. Dabei kann ein Abschnitt der Feder zwischen dem Drehpunkt und dem Sperrbolzen starr ausgebildet sein. Vorteilhaft kann durch den Zustand des Aktors die auf die Sperreinrichtung wirkende Haltekraft der Feder verändert werden. Dabei kann durch die Position des Sperrbolzens beziehungsweise durch den Zustand des Aktors eine Position oder eine Lage der Feder variiert werden. Die Feder kann auf einer zum Aktor gegenüberliegenden Seite der Sperreinrichtung beziehungsweise der Sperrkulisse angeordnet sein.

Günstig ist es auch, wenn die Feder als eine Blattfeder ausgebildet ist. Dabei kann die Blattfeder direkt auf die Sperreinrichtung beziehungsweise auf eine Kontur der Sperreinrichtung wirken.

Die Sperreinrichtung kann eine Sperrnase aufweisen. Die Feder beziehungsweise die Blattfeder kann eine Blattfedernase aufweisen. Dabei kann die Blattfedernase der Feder bei einem ersten Zustand des Aktors in Kontakt mit der Sperrnase der Sperreinrichtung sein.

In einem zweiten Zustand des Aktors kann die Blattfedernase kontaktfrei zur Sperrnase sein. Die Blattfedernase kann bei dem zweiten Zustand des Aktors auf die Sperrnase eine geringere Haltekraft ausüben, als die Rückstellkraft der Rastiereinrichtung. So kann der Wählhebel durch die Rückstellkraft der Rastiereinrichtung von der Tippgasse in die Hauptgasse bewegt werden.

In einer günstigen Ausführungsform repräsentiert der erste Zustand des Aktors einen aktivierten Zustand. Der zweite Zustand des Aktors kann einen nicht-aktivierten Zustand des Aktors repräsentieren. Unter einem aktivierten Zustand kann dabei ein bestromter Aktor verstanden werden. Unter einem nicht-aktivierten Zustand des Aktors kann dabei ein unbestromter Aktor verstanden werden.

Ein Verfahren zum Sperren einer Variante einer vorgenannten Betätigungseinrichtung, insbesondere für ein Automatikgetriebe mit Shift-by-Wire-Betätigung, ist durch die folgenden Schritte gekennzeichnet:
Arretieren der Sperreinrichtung in der Tippgasse, wobei eine die Arretierung schaffende Federkraft größer als eine Rückstellkraft der Rastiereinrichtung der Betätigungseinrichtung ist; und
Freigeben der Sperreinrichtung, sodass der Wählhebel mittels der Rückstellkraft der Rastiereinrichtung von der Tippgasse in die Hauptgasse bewegt wird.

Auch durch das genannte Verfahren kann ein erfinderischer Gedanke der vorgestellten Idee effizient und kostengünstig umgesetzt werden.

Günstig ist es auch, wenn in einem Schritt des Aktivierens vor dem Schritt des Arretierens der Aktor der Sperreinrichtung ansprechend auf ein Steuersignal aktiviert wird, wenn sich der Wählhebel in der Hauptgasse befindet, um den Wählhebel in der Hauptgasse zu sperren.

Günstig ist es auch, wenn das Verfahren einen Schritt des Freigebens des Aktors nach dem Schritt des Freigebens der Sperreinrichtung aufweist, damit der Wählhebel von der Hauptgasse in die Tippgasse bewegbar ist.

Ein Steuersignal zum Ansteuern des Aktors kann von einem Steuergerät beziehungsweise einer Vorrichtung bereitgestellt werden. Eine Vorrichtung kann ein elektrisches Gerät sein, das elektrische Signale, beispielsweise Sensorsignale verarbeitet und in Abhängigkeit davon Steuersignale ausgibt. Die Vorrichtung kann eine oder mehrere geeignete Schnittstelle aufweisen, die hard- und/oder softwaremäßig ausgebildet sein können. Bei einer hardwaremäßigen Ausbildung können die Schnittstellen beispielsweise Teil einer integrierten Schaltung sein, in der Funktionen der Vorrichtung umgesetzt sind. Die Schnittstellen können auch eigene, integrierte Schaltkreise sein oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird anhand der beigefügten Zeichnungen beispielhaft näher erläutert. Es zeigen:
- Fig. 1: eine Schnittdarstellung durch eine schematische Betätigungseinrichtung zur Auswahl von Gangstufen für ein Gangwechselgetriebe gemäß einem Ausführungsbeispiel der vorliegenden Erfindung;
- Fig. 2: eine Schnittdarstellung durch eine schematische Betätigungseinrichtung zur Auswahl von Gangstufen mit Sperrkulisse gemäß einem Ausführungsbeispiel der vorliegenden Erfindung;
- Fig. 3: eine Schnittdarstellung durch eine schematische Betätigungseinrichtung zur Auswahl von Gangstufen mit Sperrkulisse gemäß einem Ausführungsbeispiel der vorliegenden Erfindung;
- Fig. 4: eine Aufsicht auf eine Sperrkulisse einer Sperreinrichtung zur Verwendung in einer Betätigungseinrichtung gemäß einem Ausführungsbeispiel der vorliegenden Erfindung;
- Fig. 5 bis Fig. 7: Schnittdarstellungen durch eine schematische Sperreinrichtung einer Betätigungseinrichtung zur Auswahl von Gangstufen gemäß einem Ausführungsbeispiel der vorliegenden Erfindung in unterschiedlichen Positionen des Gangwahlhebels;
- Fig. 8: eine Schnittdarstellung durch eine schematische Betätigungseinrichtung zur Auswahl von Gangstufen mit Sperrkulisse gemäß einem Ausführungsbeispiel der vorliegenden Erfindung;
- Fig. 9 bis Fig. 11: Schnittdarstellungen durch eine schematische Sperreinrichtung einer Betätigungseinrichtung zur Auswahl von Gangstufen gemäß einem Ausführungsbeispiel der vorliegenden Erfindung in unterschiedlichen Positionen des Gangwahlhebels;
- Fig. 12: ein Ablaufdiagramm eines Verfahrens zum Sperren einer Betätigungseinrichtung gemäß einem Ausführungsbeispiel der vorliegenden Erfindung; und
- Fig. 13: eine schematische Darstellung eines Fahrzeugs, in dem eine Betätigungseinrichtung zur Auswahl von Gangstufen gemäß einem Ausführungsbeispiel der vorliegenden Erfindung verbaut ist.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

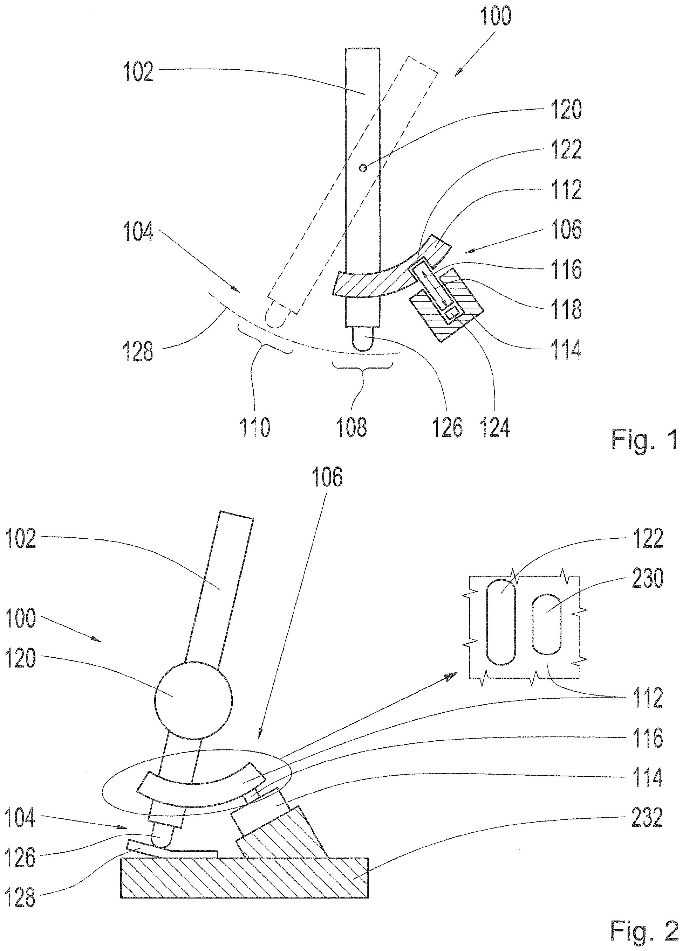

Fig. 1 zeigt eine Schnittdarstellung durch eine schematische Betätigungseinrichtung 100 zur Auswahl von Gangstufen für ein Gangwechselgetriebe gemäß einem Ausführungsbeispiel der vorliegenden Erfindung. Bei dem Gangwechselgetriebe handelt es sich gemäß einem nicht gezeigten Ausführungsbeispiel um ein Automatikgetriebe mit Shift-by-Wire-Betätigung, insbesondere für ein Fahrzeug. Die Betätigungseinrichtung 100 umfasst einen Wählhebel 102, eine Rastiereinrichtung 104 sowie eine Sperreinrichtung 106. Die Rastiereinrichtung 104 wirkt auf den Wählhebel 102. Die Rastiereinrichtung 104 ist ausgebildet, den Wählhebel 102 in einer Hauptgasse 108 und/oder in einer Tippgasse 110 einzurasten. Der Wählhebel 102 ist unabhängig von der Rastiereinrichtung 104 in der Hauptgasse 108, in der Tippgasse 110 und in einer nicht dargestellten Wechselgasse bewegbar, wobei eine Bewegung durch die Wechselgasse einen Wechsel des Wählhebels 102 zwischen der Hauptgasse 108 und der Tippgasse 110 ermöglicht.

Die Sperreinrichtung 106 umfasst eine Sperrkulisse 112, einen Aktor 114 sowie einen Sperrbolzen 116. Der Aktor 114 ist ausgebildet, den Sperrbolzen 116 zu führen und zwischen zwei Endpositionen zu bewegen. Dabei ist eine Bewegungsrichtung 118 des Sperrbolzens 116 im Wesentlichen quer zur Haupterstreckung der Sperrkulisse 112 ausgerichtet. In einem Ausführungsbeispiel ist die Bewegungsrichtung 118 in einem Toleranzbereich von 10° radial zu einem Kugelgelenk 120 des Wählhebels 102 ausgerichtet. Dabei weist in dem in Fig. 1 gezeigten Ausführungsbeispiel die Sperrkulisse 112 eine Sperrvertiefung 122 auf. Zumindest wenn der Wählhebel 102 in der Hauptgasse 108 angeordnet ist, ist der Sperrbolzen 116 ausgebildet, in die Sperrvertiefung 122 einzugreifen. Die Sperreinrichtung 106 umfasst eine mit dem Aktor 116 wirkverbundene Feder 124. Die Feder 124 ist ausgebildet, eine Haltekraft auf die Sperreinrichtung auszuüben, die größer ist, als eine Rückstellkraft der Rastiereinrichtung 104. Dabei wirkt die Rückstellkraft der Rastiereinrichtung 104 auf den Wählhebel 102 bei einer Position des Wählhebels 102 in der Tippgasse 110, um den Wählhebel 102 von der Position in der Tippgasse 110 in eine Position in der Hauptgasse 108 zu bewegen.

In dem in Fig. 1 gezeigten Ausführungsbeispiel umfasst die Rastiereinrichtung 104 einen federbelasteten Rastbolzen 126 sowie eine Rastkulisse 128.

Vorteilhaft schafft die in Fig. 1 vorgestellte Betätigungseinrichtung 100 ein kostengünstiges und spielfreies Konzept einer Shift-by-Wire-Schaltung mit Auto-P-Funktion.

Als ein Aspekt der vorgestellten Idee umfasst der Wählhebel 102 eine an dem Wählhebel 102 angeordnete Sperreinrichtung 106. Mit anderen Worten kann dies als ein Schalthebel 102 mit angeformter Sperreinheit 106 beschrieben werden. Zumindest eine Funktion der Sperreinheit 106 ist das Sperren der Tippgasse 110 beziehungsweise der Hauptgasse 108. Die Hauptgasse 108 wird auch als Automatikgasse 108 bezeichnet. Das Sperren der Gassen 108, 110 wird in einem nicht gezeigten Ausführungsbeispiel über zwei Sperrkonturen in der Sperreinheit 106 realisiert. Die Sperrkontur ist so ausgelegt, dass ein Schalten bei ausgefahrenem Sperrbolzen 116 in Längsrichtung frei aber das Schalten in Querrichtung gesperrt wird. Der Sperrbolzen 116 wird auch als Shiftlockstößel 116 bezeichnet. Die Auto-P-Funktion wird über die Kontur der Rastierung 128 realisiert. Diese ist so ausgelegt, dass der Schalthebel 102 in der Tippgasse 110 immer das Bestreben hat, in die Automatikgasse 108 zu rutschen.

Fig. 2 zeigt eine Schnittdarstellung durch eine schematische Betätigungseinrichtung 100 zur Auswahl von Gangstufen mit Sperrkulisse 112 gemäß einem Ausführungsbeispiel der vorliegenden Erfindung. Bei der Betätigungseinrichtung 100 kann es sich um ein Ausführungsbeispiel einer in Fig. 1 gezeigten Betätigungseinrichtung 100 handeln. Die Betätigungseinrichtung 100 umfasst einen Wählhebel 102, eine Rastiereinrichtung 104 sowie eine Sperreinrichtung 106. Der Wählhebel 102 kann auch als ein Schalthebel 102 bezeichnet werden. Der Wählhebel 102 ist ausgebildet, in einer Hauptgasse 108 sowie einer Tippgasse 110 bewegt zu werden. Der Wählhebel 102 weist ein Kugelgelenk 120 auf. Weiterhin weist der Wählhebel 102 eine Aufnahme für die Sperreinrichtung 106 auf. Insbesondere ist der Wählhebel 102 mit der Sperrkulisse 112 gekoppelt. Die Rastiereinrichtung 104 umfasst eine Rastkulisse 128 sowie einen Rastbolzen 126. Die Kontur der Rastkulisse 128 realisiert eine Auto-P-Funktion. Die Auto-P-Funktion ist derart ausgelegt, dass der Wählhebel 102 in der Tippgasse 110 immer das Bestreben hat, in die Hauptgasse 108 zu rutschen. Hierzu weist die Betätigungseinrichtung 100 eine nicht dargestellte Wechselgasse auf, die quer zur Hauptgasse 108 beziehungsweise quer zu der im Wesentlichen parallel zur Hauptgasse 108 ausgerichteten Tippgasse 110 angeordnet ist. Die Sperreinrichtung 106 umfasst eine Sperrkulisse 112, einen Aktor 114 sowie einen Sperrbolzen 116. In Fig. 2 ist in der oberen rechten Ecke ein Ausschnitt der Sperrkulisse 112 gesondert dargestellt. Die Sperrkulisse 112 weist eine Sperrvertiefung 122 zur Führung des Wählhebels 102 in der Hauptgasse 108 sowie eine weitere Sperrvertiefung 230 zur Führung des Wählhebels 102 in der Tippgasse 110 auf. So kann die Sperrvertiefung 122 auch als eine Sperre der Hauptgasse und die weitere Sperrvertiefung 230 als Sperre Tippgasse bezeichnet werden. Die Rastkulisse 128 und der Aktor 114 sind über ein Gehäuse 232 miteinander verbunden. Nicht dargestellt ist in Fig. 2 eine Verbindung des Gehäuses 232 mit dem Kugelgelenk 120 des Wählhebels.

In einem Ausführungsbeispiel ist der Aktor 114 als ein Shiftlockmagnet 114 ausgebildet.

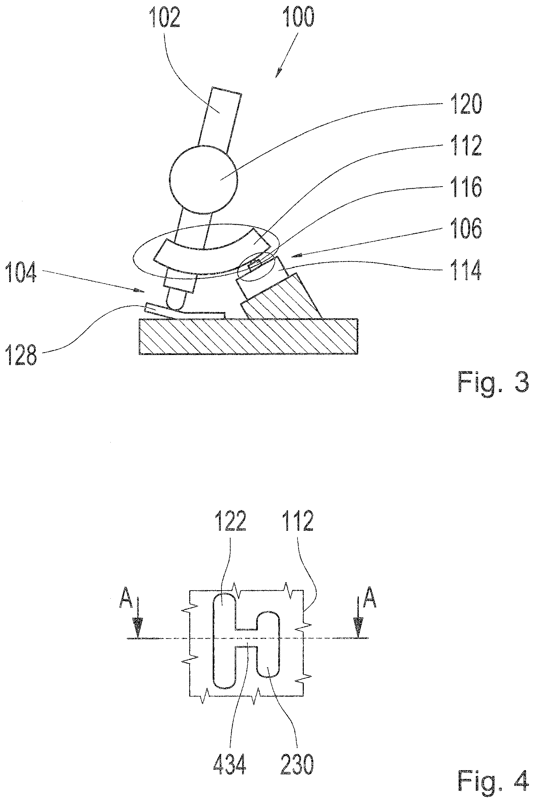

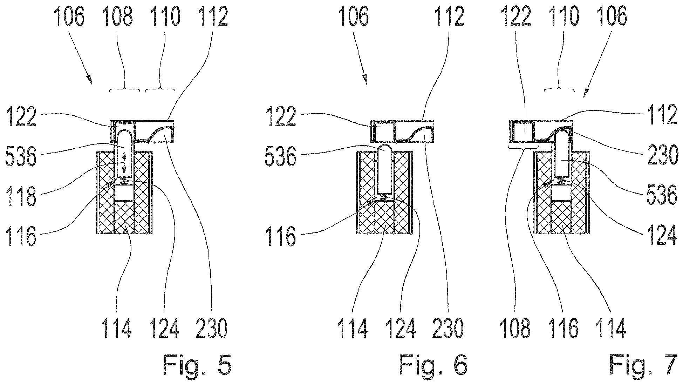

Fig. 3 zeigt eine Schnittdarstellung durch eine schematische Betätigungseinrichtung 100 zur Auswahl von Gangstufen mit Sperrkulisse 112 gemäß einem Ausführungsbeispiel der vorliegenden Erfindung. Bei der Betätigungseinrichtung 100 kann es sich um ein Ausführungsbeispiel einer in den vorangegangenen Figuren gezeigten Betätigungseinrichtung 100 handeln. Die Darstellung in Fig. 3 entspricht weitgehend der Darstellung in Fig. 2, mit dem Unterschied, dass die Sperrkulisse 112 als Detailansicht in einer Aufsicht nicht in Fig. 3 dargestellt ist, sondern eine Variante der Sperrkulisse 112 in einer Aufsicht gesondert in Fig. 4 wiedergegeben wird. Die Sperreinrichtung 106 wird in Schnittdarstellung in den darauf folgenden Figuren Fig. 5 bis Fig. 7 bei unterschiedlicher Position des Wählhebels 102 im Detail dargestellt.

Die Betätigungseinrichtung 100 umfasst einen in einem Kugelgelenk 120 gelagerten Wählhebel 102, eine Rastiereinrichtung 104 sowie eine Sperreinrichtung 106. dabei weist die Sperreinrichtung 106 einen Aktor 114 einen Sperrbolzen 116 sowie eine Sperrkulisse 112 auf.

Ein Aspekt der vorliegenden Erfindung ist der Schalthebel 102 mit angeformter Sperreinheit 106. Die Funktion der Sperreinheit 106 ist das Sperren der Tippgasse beziehungsweise der Hauptgasse. Die Hauptgasse wird auch als Automatikgasse bezeichnet, da ein Gangwechsel bei einer Stellung des Schalthebels 102 in der Hauptgasse automatisch erfolgt. Das Sperren der Tippgasse beziehungsweise der Hauptgasse wird über zwei Sperrkonturen in der Sperreinheit 106 realisiert. Mittels der Kontur der Rastierung in der Tippgasse wird der Schalthebel 102 in Querrichtung "vorgespannt" (Auto-P). Die Kontur der Sperreinheit 106 in der Hauptgasse ermöglicht bei ausgefahrenem Shiftlockstößel 116 das Schalten in Längsrichtung aber verbietet gleichzeitig das Schalten in Querrichtung. In der Tippgasse wird der Schalthebel 102 mittels eines angefederten Pins im Shiftlockstößel 116 gehalten. Der hier genannte angefederte Pin ist in den folgenden Figuren Fig. 5 bis Fig. 7 als Sperrpin 536 dargestellt. Die durch die bereits in Fig. 1 gezeigte Feder 124 auf den Pin ausgeübte Federkraft ist größer einer Rückstellkraft der Rastierung 104. Die Sperrkontur in der Tippgasse ermöglicht bei ausgefahrenem Shiftlockstößel 116 ein manuelles oder bei eingefahrenem Shiftlockstößel 116 ein automatisches Wechseln des Schalthebels 102 von der Tippgasse in die Hauptgasse.

Fig. 4 zeigt eine Aufsicht auf eine Sperrkulisse 112 einer Sperreinrichtung 106 gemäß einem Ausführungsbeispiel der vorliegenden Erfindung. Bei der Sperreinrichtung kann es sich um eine in den vorangegangenen Figuren gezeigte Sperreinrichtung 106 handeln. Die Sperrkulisse 112 weist eine Sperrvertiefung 122 sowie eine weitere Sperrvertiefung 230 auf. Die Sperrvertiefung 122 sowie die weitere Sperrvertiefung 230 sind in dem in Fig. 4 gezeigten Ausführungsbeispiel im Wesentlichen parallel zueinander ausgerichtet. Beispielsweise kann eine Toleranz der im Wesentlichen parallelen Ausrichtung der Sperrvertiefung 122 sowie der weiteren Sperrvertiefung 230 10° betragen. Die Sperrvertiefung 122 sowie die weitere Sperrvertiefung 230 sind durch eine quer zu diesen ausgerichtete zusätzliche Sperrvertiefung 434 miteinander verbunden. Die Sperrvertiefungen 122, 230, 434 weisen zusammen betrachtet näherungsweise die Form eines Buchstaben H auf.

Eine Schnittlinie AA kennzeichnet eine Querschnittebene durch die Sperrkulisse 112, die in den Figuren Fig. 5 bis Fig. 7 dargestellt ist. Der Schnitt nach AA verläuft entlang der Erstreckungsrichtung der zusätzlichen Sperrvertiefung 434 quer zur Erstreckung der Sperrvertiefung 122 sowie der weiteren Sperrvertiefung 230.

Fig. 5 bis Fig. 7 zeigt eine schematische Querschnittdarstellung einer Sperreinrichtung 106 einer Betätigungseinrichtung zur Auswahl von Gangstufen gemäß einem Ausführungsbeispiel der vorliegenden Erfindung. Bei der Betätigungseinrichtung kann es sich um eine in den Figuren Fig. 1 bis Fig. 3 gezeigte Betätigungseinrichtung 100 handeln. Die Sperreinrichtung 106 umfasst einen Aktor 114, einen Sperrbolzen 116 sowie eine Sperrkulisse 112. Weiterhin weist die Sperreinrichtung 106 eine Feder 124 sowie einen Sperrpin 536 auf. Die in Fig. 5 bis Fig. 7 gezeigte Sperreinrichtung 106 ist dadurch gekennzeichnet, dass der Sperrbolzen 116 den Sperrpin 536 und die Feder 124 umfasst. Der Sperrpin 536 ist in dem Sperrbolzen 116 in einer Bewegungsrichtung 118 des Sperrbolzens 116 bewegbar angeordnet. Der Sperrbolzen 116 weist ein Sackloch auf, in dem die Feder 124 und der Sperrpin 536 angeordnet sind. Dabei ist die Feder 124 ausgebildet, den Sperrpin 536 in einer Bewegungsrichtung 118 des Sperrbolzens 116 in Richtung der Sperrkulisse 112 zu drücken. In dem in den Figuren Fig. 5 bis Fig. 7 gezeigten Ausführungsbeispiel weist ein Ende des Sperrpins 536 eine abgerundete Form auf.

In dem in den Figuren Fig. 5 bis Fig. 7 gezeigten Ausführungsbeispiel weist der Sperrbolzen 116 ein Sackloch auf, in dem die Feder 124 sowie der Sperrpin 536 angeordnet sind. Der Sperrpin 536 weist eine Form eines Bolzens auf. Dabei ist das der Feder abgewandte Ende des Sperrpins 536 als eine Halbkugel ausgeformt. Bei dem Aktor 114 handelt es sich um einen elektromagnetischen Aktor 114, insbesondere um einen Shiftlockmagneten. Der Aktor 114 ist ausgebildet den den Sperrpin 536 umfassenden Sperrbolzen 116 linear zu bewegen, wobei in einem aktivierten Zustand des Aktors 114 der Sperrbolzen 116 in Richtung der Sperrkulisse 112 bewegt wird und in einem nicht-aktivierten Zustand des Aktors 114 der Sperrbolzen 116 weg von der Sperrkulisse 112 bewegt wird. Dabei ist die Bewegungsrichtung 118 des Sperrbolzens 116 quer zur Sperrkulisse 112 ausgerichtet.

Die Sperrkulisse 112 weist eine Sperrvertiefung 122 sowie eine weitere Sperrvertiefung 230 auf. Die Sperrvertiefung 122 schafft eine Sperre für die Hauptgasse 108. Die weitere Sperrvertiefung 230 schafft eine Sperre für die Tippgasse 110. Die Sperrvertiefung 122 weist zwei im Wesentlichen senkrechte Seitenwände auf. Dabei sind die Seitenwände der Sperrvertiefung 122 in einem Toleranzbereich von 10° parallel zur Bewegungsrichtung 118 des Sperrbolzens 116 ausgerichtet. Die Bewegungsrichtung 118 des Sperrbolzens 116 verläuft in einem Toleranzbereich von 10° quer zur Sperrkulisse 112. Die weitere Sperrvertiefung 230 weist eine zur Bewegungsrichtung 118 zumindest abschnittsweise schräge Seitenwand auf. In dem in den Figuren Fig. 5 bis Fig. 7 dargestellten Ausführungsbeispiel ist die in Richtung der Sperrvertiefung 122 ausgerichtete Seitenwand der weiteren Sperrvertiefung 230 als ein Kreissegment, welches näherungsweise einen Viertelkreis beschreibt, ausgebildet.

Die Sperreinrichtung 106 ist in den Figuren Fig. 5 bis Fig. 7 in drei unterschiedlichen Zuständen dargestellt. Fig. 5 zeigt die Sperreinrichtung 106 in einem aktivierten Zustand des Aktors 114, wobei sich ein Wählhebel der die Sperreinrichtung 106 umfassenden Betätigungseinrichtung in den Positionen P, R, N, das heißt in einer Parkposition P, in einer Position R für einen Rückwärtsgang oder in Neutralposition N, befindet. Fig. 6 zeigt die Sperreinrichtung 106 in einem nicht-aktivierten Zustand des Aktors 114, wobei sich der Wählhebel der die Sperreinrichtung 106 umfassenden Betätigungseinrichtung in der Position D für eine automatische Gangwahl des Automatikgetriebes befindet. Fig. 7 zeigt die Sperreinrichtung 106 in einem aktivierten Zustand des Aktors 114, wobei sich der Wählhebel der die Sperreinrichtung 106 umfassenden Betätigungseinrichtung in einer Schaltstellung für manuelles Schalten befindet. Dabei repräsentiert ein aktivierter Zustand des Aktors 114 bei einem elektro-magnetischen Aktor 114 einen bestromten Zustand des Aktors 114 und ein nicht-aktivierter Zustand des Aktors 114 einen und unbestromten Zustand des Aktors 114.

Fig. 5 zeigt eine schematische Querschnittdarstellung der Sperreinrichtung 106, wobei der als Shiftlockmagnet 114 ausgebildete Aktor 114 bestromt ist, und ein Teilbereich des Sperrpins 536 des Sperrbolzens 116 in der Sperrvertiefung 122 angeordnet ist. Der in der Sperrvertiefung 122 angeordnete Teilbereich des Sperrpins 536 weist ein abgerundetes Ende auf. Die Kontur der Sperrvertiefung 122 verhindert eine laterale Bewegung der Sperrkulisse 112 das heißt die Kontur der Sperrvertiefung 122 verhindert eine Bewegung der Sperrkulisse 112 quer zur Bewegungsrichtung 118 des Sperrbolzens 116.

Fig. 6 zeigt eine schematische Querschnittdarstellung der Sperreinrichtung 106, wobei der als Shiftlockmagnet 114 ausgebildete Aktor 114 unbestromt ist. Der Sperrbolzen 116 ist derart innerhalb des Aktors 114 angeordnet, dass der Wählhebel frei zwischen der Tippgasse und der Hauptgasse bewegbar ist.

Fig. 7 zeigt eine schematische Querschnittdarstellung der Sperreinrichtung 106, wobei der als Shiftlockmagnet 114 ausgebildete Aktor 114 bestromt ist, und ein Teilbereich des Sperrpins 536 des Sperrbolzens 116 in der weiteren Sperrvertiefung 230 angeordnet ist. Die Feder 124 des Sperrbolzens 116 drückt den Sperrpin 536 in die weitere Sperrvertiefung 230 beziehungsweise gegen die Kontur der weiteren Sperrvertiefung 230. Somit wird der Sperrbolzen 116 beziehungsweise der Sperrpin 536 des Sperrbolzens 116 in der weiteren Sperrvertiefung 230 gehalten. Hieraus resultiert eine Haltekraft für die Sperrkulisse 112. Bei Aufbringen einer die genannte Haltekraft übersteigenden Kraft kann der Sperrpin 536 gegen eine Federkraft der Feder 124 entlang der zumindest abschnittsweise schrägen in Richtung der Sperrvertiefung 122 ausgerichteten Seitenwand der weiteren Sperrvertiefung 230 bewegt werden und in Richtung des Aktors 114 bewegt werden, und somit ein Wählhebel der Betätigungseinrichtung von der Tippgasse 110 in die Hauptgasse 108 bewegt werden.

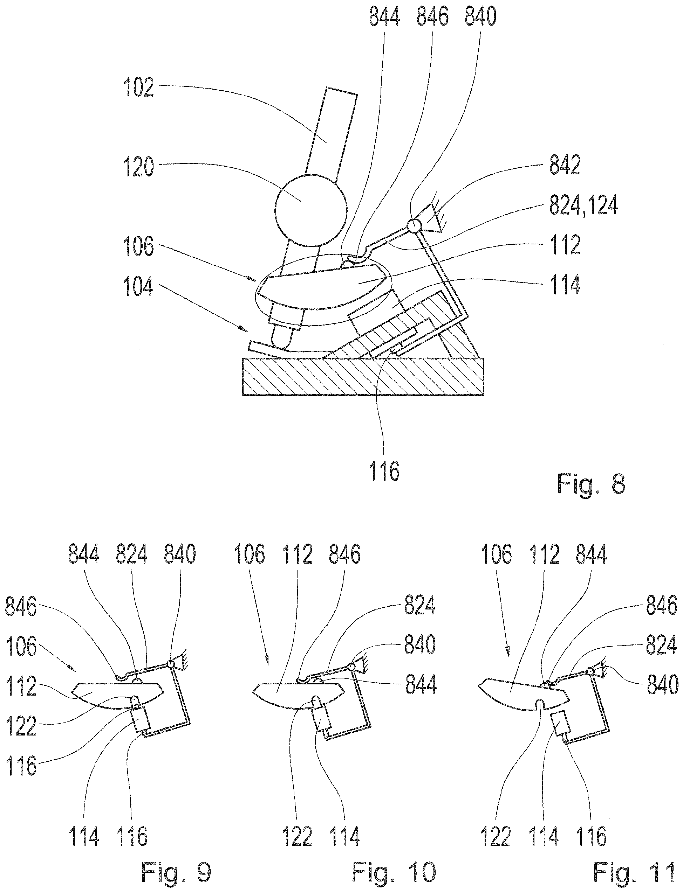

Fig. 8 zeigt eine Schnittdarstellung durch eine schematische Betätigungseinrichtung 100 zur Auswahl von Gangstufen mit Sperrkulisse gemäß einem Ausführungsbeispiel der vorliegenden Erfindung. Bei der Betätigungseinrichtung 100 kann es sich um ein Ausführungsbeispiel einer in den vorangegangenen Figuren gezeigten Betätigungseinrichtung 100 handeln. Die Darstellung in Fig. 8 entspricht weitgehend der Darstellung in Fig. 3 mit dem Unterschied der Sperreinrichtung 106. Die Sperreinrichtung 106 umfasst einen Aktor 114, einen Sperrbolzen 116 sowie eine Sperrkulisse 112. Eine Feder 124 der Sperreinrichtung 106 ist als Blattfeder 824 ausgebildet. Die Blattfeder 824 ist mit dem Sperrbolzen 116 wirkverbunden und um einen Drehpunkt 840 drehbar gelagert. In dem Drehpunkt 840 ist die Blattfeder 824 mit einem Lager 842 gekoppelt. Die Sperrkulisse 812 weist an einer dem Aktor 114 abgewandten Seite eine Sperrnase 844 auf. Die Blattfeder 824 weist eine Blattfedernase 846 auf. In dem in Fig. 8 gezeigten Ausführungsbeispiel ist der Wählhebel 102 in der Tippgasse 110 angeordnet. Die Blattfedernase 846 ist in Kontakt mit der Sperrnase 844. Die Position der Blattfedernase 846 zur Sperrnase 844 in Abhängigkeit des Aktorzustands beziehungsweise der Position des Wählhebels 102 wird in den folgenden Figuren Fig. 9 bis Fig. 11 dargestellt.

In einem Ausführungsbeispiel, welches an die in Fig. 8 bis Fig. 11 dargestellten Ausführungsbeispiele angelehnt ist, kann die Funktion des in Fig. 9 bis Fig. 11 gezeigten Pins 536 im Shiftlockstößel 116 von der Funktion des Stößels 116 "getrennt" werden. Dies hat den Vorteil, dass mögliche Missbrauchskräfte in Querrichtung direkt auf den Stößel 116 wirken und nicht auf den Pin 536. Hierzu wird eine Vorrichtung mit einer Blattfeder 824 integriert, die um einen festen Drehpunkt 840 am Gehäuse rotiert werden und somit zwei Endpositionen einnehmen kann. Bei einem bestromten Shiftlockmagneten 114 hat die Blattfeder 824 keinen Kontakt zur Sperrkulisse 112. Die Sperrkulisse 112 wird auch als Sperreinheit 112 bezeichnet. Somit kann der vorgespannte Schalthebel 102 in der Tippgasse in die Hauptgasse zurückrutschen. Bei einem unbestromten Shiftlockmagneten 116 liegt die Blattfeder 824 an einer entsprechenden Kontur an der Sperrkulisse 112 an. Diese Kontur lässt nur ein manuelles Wechseln zwischen den Gassen zu. Blattfederkraft in Querrichtung ist größer als eine Rückstellkraft der Rastierung.

Fig. 9 bis Fig. 11 zeigt eine schematische Querschnittdarstellung einer Sperreinrichtung 106 einer Betätigungseinrichtung zur Auswahl von Gangstufen gemäß einem Ausführungsbeispiel der vorliegenden Erfindung mit einem Wählhebel 102 in unterschiedlichen Positionen. Bei der Betätigungseinrichtung kann es sich um eine beispielsweise in den Figuren Fig. 1 bis Fig. 3 oder Fig. 8 gezeigte Betätigungseinrichtung 100 handeln. Die Darstellung der Sperreinrichtung 106 in den Figuren Fig. 9 bis Fig. 11 weist eine Ähnlichkeit mit der Darstellung der Sperreinrichtung 106 in Fig. 8 auf. Dabei zeigen Figuren unterschiedliche Positionen beziehungsweise Zustände der Sperreinrichtung 106. Die Sperreinrichtung 106 umfasst einen Aktor 114, einen Sperrbolzen 116 sowie eine Sperrkulisse 112. weiterhin weist die Sperreinrichtung 106 eine Blattfeder 824 auf. Die Blattfeder 824 ist an einem Drehpunkt 840 drehbar gelagert. An einem, dem Drehpunkt 840 abgewandten, Ende weist die Blattfeder 824 eine Blattfedernase 846 auf. Die Sperrkulisse 112 weist auf einer Seite eine Sperrvertiefung 122 auf. Auf einer der Seite mit der Sperrvertiefung 122 gegenüberliegenden Seite weist die Sperrkulisse 112 eine Sperrnase 844 auf. Sowohl die Sperrvertiefung 122 als auch die Sperrnase 848 sind durch eine Kontur der Sperrkulisse 112 bedingt. Der Aktor 116 ist über das Lager 840 mit der Blattfeder 824 wirkverbunden.

Die Sperreinrichtung 106 ist in den Figuren Fig. 9 bis Fig. 11 in drei unterschiedlichen Zuständen dargestellt. Fig. 9 zeigt die Sperreinrichtung 106 in einem aktivierten Zustand des Aktors 114, wobei sich ein Wählhebel der die Sperreinrichtung 106 umfassenden Betätigungseinrichtung in den Positionen P, R, N, das heißt in einer Parkposition P, in einer Position R für einen Rückwärtsgang oder in Neutralposition N, befindet. Fig. 10 zeigt die Sperreinrichtung 106 in einem nicht-aktivierten Zustand des Aktors 114, wobei sich der Wählhebel der die Sperreinrichtung 106 umfassenden Betätigungseinrichtung in der Position D für eine automatische Gangwahl des Automatikgetriebes befindet. Fig. 11 zeigt die Sperreinrichtung 106 in einem nicht-aktivierten Zustand des Aktors 114, wobei sich der Wählhebel der die Sperreinrichtung 106 umfassenden Betätigungseinrichtung in einer Schaltstellung für manuelles Schalten befindet. Dabei repräsentiert ein aktivierter Zustand des Aktors 114 bei einem elektro-magnetischen Aktor 114 einen bestromten Zustand des Aktors 114 und ein nicht-aktivierter Zustand des Aktors 114 einen und unbestromten Zustand des Aktors 114. in einem Ausführungsbeispiel ist der Aktor 114 als ein Shiftlockmagnet 114 ausgebildet.

In Fig. 9 greift der Sperrbolzen 116 in die Sperrvertiefung 122 ein und fixiert somit die Sperrkulisse 112 beziehungsweise sperrt einem mit der Sperreinrichtung 106 wirkverbunden Wählhebel in der Hauptgasse. Die mit dem Sperrbolzen 116 wirkverbunden der Blattfeder 824 ist kontaktfrei zur Sperrnase 844 sowie kontaktfrei zur Sperrkulisse 112. In dem in Fig. 9 gezeigten Zustand der Sperreinrichtung 106 übt die Blattfeder 824 keine Haltekraft auf die Sperrkulisse 112 beziehungsweise auf die Sperreinrichtung 106 aus.

In Fig. 10 ist der Aktor 114 in einem unbestromten Zustand dargestellt. Der Sperrbolzen 116 greift nicht in die Sperrvertiefung 122 ein. Die Blattfeder 824 ist in Kontakt zur Sperrnase 844. Die Blattfeder 824 ist in Kontakt mit der Sperrkulisse 112. Die Blattfeder 824 übt eine vordefinierte Haltekraft auf die Sperrkulisse 112 aus. Die Haltekraft kann als eine Blattfederkraft in Querrichtung bezeichnet werden. Dabei ist die Querrichtung in einem Toleranzbereich von bis zu 30° quer zur Bewegungsrichtung des Sperrbolzens 116 ausgerichtet. Die Position oder Lage der Sperreinrichtung 106 bedingt, dass ein mit der Sperreinrichtung 106 gekoppelter Wählhebel 102 sich in der Hauptgasse befindet.

Fig. 11 zeigt die Sperreinrichtung 106 in einer Position oder in einem Zustand, indem ein mit der Sperreinrichtung 106 gekoppelter Wählhebel 102 sich in der Tippgasse befindet. Im Unterschied zu Fig. 10 ist die Blattfedernase 846 auf einer der in Fig. 10 gezeigten Position gegenüberliegenden Seite der Sperrnase 844 angeordnet. Die Blattfeder 824 übt eine Haltekraft auf die Sperrkulisse 112 aus. Die durch die Blattfeder 824 auf die Sperreinrichtung 106 wirkende Haltekraft kann verringert werden, indem der Aktor 114 teilweise aktiviert wird und somit der Sperrbolzen 116 zumindest teilweise in Richtung der Sperrkulisse 112 bewegt wird. Dadurch verringert sich die von der Blattfeder 824 ausgehende auf die Sperrkulisse 112 wirkende Haltekraft.

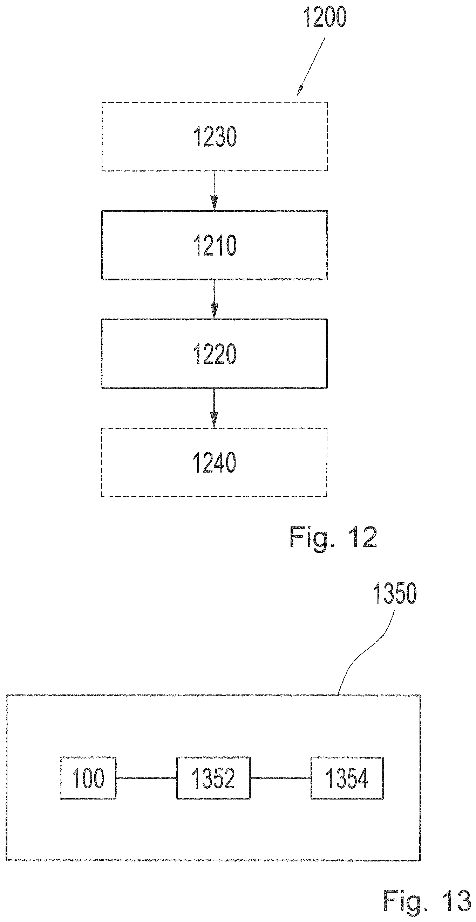

Fig. 12 zeigt ein Ablaufdiagramm eines Verfahrens 1200 zum Sperren einer Betätigungseinrichtung gemäß einem Ausführungsbeispiel der vorliegenden Erfindung. Bei der Betätigungseinrichtung kann es sich um ein Ausführungsbeispiel einer in den vorangegangenen Figuren beschriebenen Betätigungseinrichtung 100 handeln. Das Verfahren umfasst einen Schritt 1210 des Arretierens der Sperreinrichtung in der Tippgasse, wobei eine die Arretierung schaffende Federkraft größer als der Rückstellkraft der Rastiereinrichtung der Betätigungseinrichtung ist, sowie einen Schritt 1220 des Freigebens der Sperreinrichtung, sodass der Wählhebel mittels der Rückstellkraft der Rastiereinrichtung von der Tippgasse in die Hauptgasse bewegt wird.

Optional weist das Verfahren 1200 vor dem Schritt 1210 des Arretierens einen Schritt 1230 des Aktivierens des Aktors auf. Im Schritt 1230 des Aktivierens wird der Aktor der Sperreinrichtung ansprechend auf ein Steuersignal aktiviert, wenn sich der Wählhebel in der Hauptgasse befindet, um den Wählhebel in der Hauptgasse zu sperren.

Optional weist das Verfahren 1200 nach dem Schritt 1220 des Freigebens der Sperreinrichtung einen Schritt 1240 des Freigebens des Aktors auf, damit der Wählhebel von der Hauptgasse in die Tippgasse bewegbar ist.

Fig. 13 zeigt eine schematische Darstellung eines Fahrzeugs 1350 in dem eine Betätigungseinrichtung 100 zur Auswahl von Gangstufen gemäß einem Ausführungsbeispiel der vorliegenden Erfindung verbaut ist. Das Fahrzeug 1350 weist eine Betätigungseinrichtung 100 zur Auswahl von Gangstufen für ein Gangwechselgetriebe 1352, ein entsprechendes Gangwechselgetriebe 1352 sowie einen Motor 1354 auf. Die Betätigungseinrichtung 100 ist mit dem Gangwechselgetriebe 1352 verbunden. Das Gangwechselgetriebe 1352 ist mit dem Rotor 1354 gekoppelt. In einem Ausführungsbeispiel handelt es sich bei dem Gangwechselgetriebe 1352 um ein Automatikgetriebe 1352 mit einer Shift-by-Wire-Betätigung. So sind die Betätigungseinrichtung 100 und das Gangwechselgetriebe 1352 über eine Steuerleitung verbunden, wobei über die Steuerleitung insbesondere elektrische Steuersignale übertragen werden.

Bei einem Getriebe 1352 mit Shift-by-Wire-Technik, oder einem Getriebe 1352, welches über die Shift-by-Wire-Technik mit einer Betätigungseinrichtung 100 verbunden ist, wird ein Gangwechselwunsch oder ein sogenannter Fahrerwunsch, also die von einem Fahrer oder Bediener gewünschte Automaitkgetriebeposition nicht mechanisch, sondern elektrisch oder elektronisch übertragen. Der Fahrerwunsch wird in der Betätigungseinrichtung 100 in ein elektrisches Signal gewandelt und an ein Steuergerät des Getriebes 1352 übermittelt, welches eine Aktorik oder einen Positionssteller am Automatikgetriebe ansteuert. Durch die elektronische Steuerung können beliebige Schaltmuster automatisch geschaltet werden. Eine Programmsteuerung kann ansprechend auf ein Vorliegen vorbestimmter Schaltbedingungen oder erfasster Betriebsparameter den Schaltbetrieb steuern. So kann ansprechend auf einen erfassten Betriebsparameter auch ohne einen expliziten Fahrerwunsch der Schaltgetriebe gesteuert werden. So kann beispielsweise bei einem geparkten Fahrzeug 1350 die Steuerung das Getriebe 1352 in eine Parksperrenstellung schalten, ohne einen Fahrerwunsch des Fahrers des Fahrzeugs hierfür zu empfangen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden, wobei die Erfindung durch die nachfolgenden Ansprüche definiert wird. Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Betätigungseinrichtung
- 102: Wählhebel
- 104: Rastiereinrichtung
- 106: Sperreinrichtung
- 108: Hauptgasse
- 110: Tippgasse
- 112: Sperrkulisse
- 114: Aktor
- 116: Sperrbolzen
- 118: Bewegungsrichtung
- 120: Kugelgelenk
- 122: Sperrvertiefung
- 124: Feder
- 126: Rastbolzen
- 128: Rastkulisse

- 230: weitere Sperrvertiefung
- 232: Gehäuse

- 434: zusätzliche Sperrvertiefung

- 536: Sperrpin

- 824: Blattfeder
- 840: Drehpunkt
- 842: Lager
- 844: Sperrnase
- 846: Blattfedernase

- 1200: Verfahren
- 1210: Schritt des Arretierens
- 1220: Schritt des Freigebens
- 1230: Schritt des Aktivierens
- 1240: Schritt des Freigebens

- 1350: Fahrzeug
- 1352: Getriebe
- 1354: Motor

## Patentansprüche

1. Betätigungseinrichtung (100) zur Auswahl von Gangstufen für ein Gangwechselgetriebe (1352), insbesondere für ein Automatikgetriebe mit Shift-by-Wire-Betätigung, wobei ein Wählhebel (102) der Betätigungseinrichtung (100) in einer Hauptgasse (108) und einer Tippgasse (110) sowie zwischen der Hauptgasse (108) und der Tippgasse (110) in einer Wechselgasse bewegbar ist, wobei die Betätigungseinrichtung (100) eine auf den Wählhebel (102) wirkende Rastiereinrichtung (104) umfasst,
wobei die Betätigungseinrichtung (100) eine Sperreinrichtung (106) aufweist, die eine Sperrkulisse (112), einen Aktor (114) und einen durch den Aktor (114) geführten Sperrbolzen (116) umfasst, wobei der Aktor den Sperrbolzen bewegt, wobei die Sperrkulisse (112) zumindest eine Sperrvertiefung (122) aufweist, wobei die Sperreinrichtung (106) eine Feder (124; 824) aufweist, **dadurch gekennzeichnet dass** bei einer Stellung des Wählhebels (102) innerhalb der Hauptgasse (108) der Sperrbolzen (116) durch den Aktor (114) bewegbar ist und der Sperrbolzen (116) ausgebildet ist, in die Sperrvertiefung (122) einzugreifen,
wobei eine durch die Feder (124; 824) bewirkte Haltekraft, welche bewirkt, dass die Sperreinrichtung in einer Position gehalten wird, solange keine die Haltekraft übersteigende Kraft auf ein Element der Betätigungseinrichtung ausgeübt wird, größer ist, als eine von einer Position des Wählhebels (102) in der Tippgasse (110) in eine Position in der Hauptgasse (108) wirkenden Rückstellkraft der Rastiereinrichtung (104) der Betätigungseinrichtung (100) und wobei die Feder (124; 824) ausgebildet ist, um gegen eine Bewegung des Wählhebels (102) aus der Tippgasse (110) in die Hauptgasse (108) zu wirken, wenn der Wählhebel (102) in der Tippgasse (110) positioniert ist.

2. Betätigungseinrichtung (100) gemäß Anspruch 1, **dadurch gekennzeichnet, dass** der Aktor (114) als ein Elektromagnet ausgebildet ist.

3. Betätigungseinrichtung (100) gemäß einem der vorangegangenen Ansprüche, **dadurch gekennzeichnet, dass** die Sperrkulisse (112) eine weitere Sperrvertiefung (230) aufweist, wobei eine in Richtung der Sperrvertiefung (122) angeordnete Seitenwand der weiteren Sperrvertiefung (122) zumindest teilweise schräg zu einer Bewegungsrichtung (118) des Sperrbolzens (116) ausgerichtet ist.

4. Betätigungseinrichtung (100) gemäß einem der vorangegangenen Ansprüche, **dadurch gekennzeichnet, dass** die Sperrvertiefung (122) der Sperrkulisse (112) zumindest abschnittsweise eine zur Bewegungsrichtung (118) des Sperrbolzens (116) im Wesentlichen parallel ausgerichtete Seitenwand aufweist.

5. Betätigungseinrichtung (100) gemäß einem der vorangegangenen Ansprüche, **dadurch gekennzeichnet, dass** die Sperrvertiefung (122) und/oder die weitere Sperrvertiefung (230) eine Längserstreckung aufweisen und in einem Toleranzbereich parallel zu der Hauptgasse (108) und/oder der Tippgasse (110) ausgerichtet sind, insbesondere wobei die Längserstreckung eine größere Länge als Breite der Sperrvertiefung (122) und/oder der weiteren Sperrvertiefung (230) aufweist.

6. Betätigungseinrichtung (100) gemäß einem der vorangegangenen Ansprüche, **dadurch gekennzeichnet, dass** der Sperrbolzen (116) einen Sperrpin (536) umfasst, der in dem Sperrbolzen (116) in Bewegungsrichtung (118) des Sperrbolzens (116) innerhalb des Aktors (114) bewegbar angeordnet ist, wobei die Feder (124) ausgebildet ist, den Sperrpin (536) in Bewegungsrichtung (118) des Sperrbolzens (116) in Richtung der Sperrkulisse (112) zu drücken, und/oder wobei der Sperrbolzen (116) einen Sperrpin (536) umfasst, der in einem in die Sperrkulisse (112) eingreifbaren Teilbereich eine abgerundete und/oder runde Form aufweist.

7. Betätigungseinrichtung (100) gemäß einem der vorangegangenen Ansprüche, **dadurch gekennzeichnet, dass** in einem ersten Zustand des Aktors (114) der Wählhebel (102) in der Hauptgasse (108) und/oder in der Tippgasse (110) und/oder zwischen der Hauptgasse (108) und der Tippgasse (110) bewegbar ist, und dass in einem zweiten Zustand des Aktors (114) der Wählhebel (102) in der Hauptgasse (108) und/oder in der Tippgasse (110) oder von der Tippgasse (110) in die Hauptgasse (108) bewegbar ist.

8. Betätigungseinrichtung (100) gemäß einem der vorangegangenen Ansprüche, **dadurch gekennzeichnet, dass** die Feder (824) als eine mit dem Sperrbolzen (116) wirkverbundene Feder (824) ausgebildet ist, die um einen Drehpunkt (840) drehbar gelagert ist.

9. Betätigungseinrichtung (100) gemäß einem der vorangegangenen Ansprüche, **dadurch gekennzeichnet, dass** die Feder (824) als eine Blattfeder (824) ausgebildet ist.

10. Betätigungseinrichtung (100) gemäß Anspruch 8 oder Anspruch 9, **dadurch gekennzeichnet, dass** die Sperreinrichtung (106) eine Sperrnase (844) aufweist, wobei eine Blattfedernase (846) der Feder (824) bei einem ersten Zustand des Aktors (114) in Kontakt mit der Sperrnase (844) ist.

11. Betätigungseinrichtung (100) gemäß Anspruch 10, **dadurch gekennzeichnet, dass** die Blattfedernase (846) bei einem zweiten Zustand des Aktors (114) kontaktfrei zur Sperrnase (844) ist und/oder die Blattfedernase (846) bei dem zweiten Zustand des Aktors (114) auf die Sperrnase (844) eine geringere Haltekraft ausübt, als die Rückstellkraft der Rastiereinrichtung (104).

12. Betätigungseinrichtung (100) gemäß einem der vorangegangenen Ansprüche, **dadurch gekennzeichnet, dass** der erste Zustand des Aktors (114) einen aktivierten Zustand und der zweite Zustand des Aktors (114) einen nicht-aktivierten Zustand repräsentiert.

13. Verfahren (1200) zum Sperren einer Betätigungseinrichtung (100) gemäß einem der vorangegangenen Ansprüche, insbesondere für ein Automatikgetriebe mit Shift-by-Wire-Betätigung, **gekennzeichnet durch** die folgenden Schritte:
Arretieren (1210) der Sperreinrichtung (106) in der Tippgasse (110), wobei eine die Arretierung schaffende Federkraft größer als eine Rückstellkraft der Rastiereinrichtung (104) der Betätigungseinrichtung (100) ist; und
Freigeben (1220) der Sperreinrichtung (106), sodass der Wählhebel (102) mittels der Rückstellkraft der Rastiereinrichtung (104) von der Tippgasse (110) in die Hauptgasse (108) bewegt wird.

14. Verfahren (1200) gemäß Anspruch 13, **gekennzeichnet durch** einen Schritt (1230) des Aktivierens des Aktors (114) der Sperreinrichtung (106) ansprechend auf ein Steuersignal, wenn sich der Wählhebel (102) in der Hauptgasse (108) befindet, um den Wählhebel (102) in der Hauptgasse (108) zu sperren und/oder einen Schritt (1240) des Freigebens des Aktors (114), damit der Wählhebel (102) von der Hauptgasse (108) in die Tippgasse (110) bewegbar ist.

## Claims

1. Actuating device (100) for selecting gear stages for a change-speed transmission (1352), in particular for an automatic transmission with shift-by-wire actuation, it being possible for a selector lever (102) of the actuating device (100) to be moved in a main gate (108) and a tapping gate (110) and in a switching gate between the main gate (108) and the tapping gate (110), the actuating device (100) comprising a latching device (104) which acts on the selector lever (102), the actuating device (100) having a locking device (106) which comprises a locking gate (112), an actuator (114) and a locking bolt (116) which is guided by way of the actuator (114), the actuator moving the locking bolt, the locking gate (112) having at least one locking depression (122), the locking device (106) having a spring (124; 824), **characterized in that**, in the case of a position of the selector lever (102) within the main gate (108), the locking bolt (116) can be moved by way of the actuator (114), and the locking bolt (116) is configured to engage into the locking depression (122), a holding force which is brought about by way of the spring (124; 824) and brings it about that the locking device is held in a position as long as no force which exceeds the holding force is exerted on an element of the actuating device being greater than a restoring force of the latching device (104) of the actuating device (100), which restoring force acts from a position of the selector lever (102) in the tapping gate (110) into a position in the main gate (108), and the spring (124; 824) being configured to act counter to a movement of the selector lever (102) out of the tapping gate (110) into the main gate (108) if the selector lever (102) is positioned in the tapping gate (110).

2. Actuating device (100) according to Claim 1, **characterized in that** the actuator (114) is configured as an electromagnet.

3. Actuating device (100) according to either of the preceding claims, **characterized in that** the locking gate (112) has a further locking depression (230), a side wall of the further locking depression (122), which side wall is arranged in the direction of the locking depression (122), being oriented at least partially obliquely with respect to a movement direction (118) of the locking bolt (116).

4. Actuating device (100) according to one of the preceding claims, **characterized in that** the locking depression (122) of the locking gate (112) has, at least in sections, a side wall which is oriented substantially parallel to the movement direction (118) of the locking bolt (116).

5. Actuating device (100) according to one of the preceding claims, **characterized in that** the locking depression (122) and/or the further locking depression (230) have/has a longitudinal extent and are/is oriented in a tolerance range parallel to the main gate (108) and/or the tapping gate (110), the longitudinal extent having, in particular, a greater length than width of the locking depression (122) and/or the further locking depression (230).

6. Actuating device (100) according to one of the preceding claims, **characterized in that** the locking bolt (116) comprises a locking pin (536) which is arranged in the locking bolt (116) such that it can be moved in the movement direction (118) of the locking bolt (116) within the actuator (114), the spring (124) being configured to press the locking pin (536) in the movement direction (118) of the locking bolt (116) in the direction of the locking gate (112), and/or the locking bolt (116) comprising a locking pin (536) which has a rounded and/or round shape in a part region which can engage into the locking gate (112).

7. Actuating device (100) according to one of the preceding claims, **characterized in that**, in a first state of the actuator (114), the selector lever (102) can be moved in the main gate (108) and/or in the tapping gate (110) and/or between the main gate (108) and the tapping gate (110), and **in that**, in a second state of the actuator (114), the selector lever (102) can be moved in the main gate (108) and/or in the tapping gate (110) or from the tapping gate (110) into the main gate (108).

8. Actuating device (100) according to one of the preceding claims, **characterized in that** the spring (824) is configured as a spring (824) which is operatively connected to the locking bolt (116) and is mounted such that it can be rotated about a pivot point (840).

9. Actuating device (100) according to one of the preceding claims, **characterized in that** the spring (824) is configured as a leaf spring (824).

10. Actuating device (100) according to Claim 8 or Claim 9, **characterized in that** the locking device (106) has a locking lug (844), a leaf spring lug (846) of the spring (824) being in contact with the locking lug (844) in a first state of the actuator (114).

11. Actuating device (100) according to Claim 10, **characterized in that** the leaf spring lug (846) is out of contact with the locking lug (844) in a second state of the actuator (114) and/or the leaf spring lug (846) exerts a lower holding force on the locking lug (844) in the second state of the actuator (114) than the restoring force of the latching device (104).

12. Actuating device (100) according to one of the preceding claims, **characterized in that** the first state of the actuator (114) represents an activated state, and the second state of the actuator (114) represents an non-activated state.

13. Method (1200) for locking an actuating device (100) according to one of the preceding claims, in particular for an automatic transmission with shift-by-wire actuation, **characterized by** the following steps:
fixing (1210) of the locking device (106) in the tapping gate (110), a spring force which produces the fixing action being greater than a restoring force of the latching device (104) of the actuating device (100); and
releasing (1220) of the locking device (106), with the result that the selector lever (102) is moved from the tapping gate (110) into the main gate (108) by means of the restoring force of the latching device (104).

14. Method (1200) according to Claim 13, **characterized by** a step (1230) of the activating of the actuator (114) of the locking device (106) in a manner which responds to a control signal if the selector lever (102) is situated in the main gate (108), in order to lock the selector lever (102) in the main gate (108), and/or a step (1240) of the releasing of the actuator (114), in order that the selector lever (102) can be moved from the main gate (108) into the tapping gate (110).

## Revendications

1. Dispositif d'actionnement (100) pour la sélection de rapports de vitesses pour une transmission à changement de vitesses (1352), en particulier pour une transmission automatique avec actionnement à commande électronique, un levier de sélection (102) du dispositif d'actionnement (100) pouvant être déplacé dans une voie principale (108) et dans une voie de commande impulsionnelle (110) ainsi qu'entre la voie principale (108) et la voie de commande impulsionnelle (110) dans une voie de changement de vitesses, le dispositif d'actionnement (100) comprenant un dispositif d'encliquetage (104) agissant sur le levier de sélection (102),
le dispositif d'actionnement (100) présentant un dispositif de blocage (106) qui comprend une coulisse de blocage (112), un actionneur (114) et un boulon de blocage (116) guidé par l'actionneur (114), l'actionneur déplaçant le boulon de blocage, la coulisse de blocage (112) présentant au moins un renfoncement de blocage (122), le dispositif de blocage (106) présentant un ressort (124 ; 824), **caractérisé en ce que** dans le cas où le levier de sélection (102) se trouve à l'intérieur de la voie principale (108), le boulon de blocage (116) peut être déplacé par l'actionneur (114) et le boulon de blocage (116) est réalisé de manière à s'engager dans le renfoncement de blocage (122), une force de retenue engendrée par le ressort (124 ; 824), qui fait en sorte que le dispositif de blocage soit maintenu en position tant qu'aucune force dépassant la force de retenue n'est exercée sur un élément du dispositif d'actionnement, étant supérieure à une force de rappel du dispositif d'encliquetage (104) du dispositif d'actionnement (100) agissant depuis une position du levier de sélection (102) dans la voie de commande impulsionnelle (110) dans une position de la voie principale (108), et le ressort (124 ; 824) étant réalisé de manière à agir à l'encontre d'un déplacement du levier de sélection (102) hors de la voie de commande impulsionnelle (110) dans la voie principale (108) lorsque le levier de sélection (102) est positionné dans la voie de commande impulsionnelle (110).

2. Dispositif d'actionnement (100) selon la revendication 1, **caractérisé en ce que** l'actionneur (114) est réalisé sous forme d'un électroaimant.

3. Dispositif d'actionnement (100) selon l'une quelconque des revendications précédentes, **caractérisé en ce que** la coulisse de blocage (112) présente un renfoncement de blocage supplémentaire (230), une paroi latérale du renfoncement de blocage supplémentaire (122) disposée dans la direction du renfoncement de blocage (122) étant orientée au moins en partie obliquement par rapport à une direction de déplacement (118) du boulon de blocage (116).

4. Dispositif d'actionnement (100) selon l'une quelconque des revendications précédentes, **caractérisé en ce que** le renfoncement de blocage (122) de la coulisse de blocage (112) présente au moins en partie une paroi latérale orientée essentiellement parallèlement à la direction de déplacement (118) du boulon de blocage (116).

5. Dispositif d'actionnement (100) selon l'une quelconque des revendications précédentes, **caractérisé en ce que** le renfoncement de blocage (122) et/ou le renfoncement de blocage supplémentaire (230) présentent une étendue longitudinale et sont orientés dans une région de tolérance parallèlement à la voie principale (108) et/ou à la voie de commande impulsionnelle (110), en particulier l'étendue longitudinale présentant une plus grande longueur que la largeur du renfoncement de blocage (122) et/ou du renfoncement de blocage supplémentaire (230).

6. Dispositif d'actionnement (100) selon l'une quelconque des revendications précédentes, **caractérisé en ce que** le boulon de blocage (116) comprend une goupille de blocage (536) qui est disposée de manière déplaçable à l'intérieur de l'actionneur (114) dans le boulon de blocage (116) dans la direction de déplacement (118) du boulon de blocage (116), le ressort (124) étant réalisé de manière à presser la goupille de blocage (536) dans la direction de déplacement (118) du boulon de blocage (116) dans la direction de la coulisse de blocage (112) et/ou le boulon de blocage (116) comprenant une goupille de blocage (536) qui, dans une région partielle pouvant être engagée dans la coulisse de blocage (112), présente une forme arrondie et/ou une forme ronde.

7. Dispositif d'actionnement (100) selon l'une quelconque des revendications précédentes, **caractérisé en ce que** dans un premier état de l'actionneur (114), le levier de sélection (102) peut être déplacé dans la voie principale (108) et/ou dans la voie de commande impulsionnelle (110) et/ou entre la voie principale (108) et la voix de commande impulsionnelle (110), et **en ce que** dans un deuxième état de l'actionneur (114), le levier de sélection (102) peut être déplacé dans la voie principale (108) et/ou dans la voie de commande impulsionnelle (110) ou depuis la voie de commande impulsionnelle (110) dans la voie principale (108).

8. Dispositif d'actionnement (100) selon l'une quelconque des revendications précédentes, **caractérisé en ce que** le ressort (824) est réalisé sous forme de ressort (824) en liaison fonctionnelle avec le boulon de blocage (116), lequel ressort est supporté à rotation autour d'un centre de rotation (840).

9. Dispositif d'actionnement (100) selon l'une quelconque des revendications précédentes, **caractérisé en ce que** le ressort (824) est réalisé sous forme de ressort à lame (824).

10. Dispositif d'actionnement (100) selon la revendication 8 ou la revendication 9, **caractérisé en ce que** le dispositif de blocage (106) présente un ergot de blocage (844), un ergot de ressort à lame (846) du ressort (824) étant en contact avec l'ergot de blocage (844) dans un premier état de l'actionneur (114).

11. Dispositif d'actionnement (100) selon la revendication 10, **caractérisé en ce que** l'ergot de ressort à lame (846), dans un état supplémentaire de l'actionneur (114), n'est pas en contact avec l'ergot de blocage (844) et/ou le ressort à lame (846), dans le deuxième état de l'actionneur (114), exerce sur l'ergot de blocage (844) une force de retenue inférieure à la force de rappel du dispositif d'encliquetage (104).

12. Dispositif d'actionnement (100) selon l'une quelconque des revendications précédentes, **caractérisé en ce que** le premier état de l'actionneur (114) représente un état activé et le deuxième état de l'actionneur (114) représente un état non activé.

13. Procédé (1200) pour bloquer un dispositif d'actionnement (100) selon l'une quelconque des revendications précédentes, en particulier pour une transmission automatique avec un actionnement à commande électronique, **caractérisé par** les étapes suivantes :
blocage (1210) du dispositif de blocage (106) dans la voie à commande impulsionnelle (110), une force de ressort provoquant le blocage étant supérieure à une force de rappel du dispositif d'encliquetage (104) du dispositif d'actionnement (100) ; et
libération (1220) du dispositif de blocage (106), de telle sorte que le levier de sélection (102) soit déplacé au moyen de la force de rappel du dispositif d'encliquetage (104) de la voie à commande impulsionnelle (110) dans la voie principale (108).

14. Procédé (1200) selon la revendication 13, **caractérisé par** une étape (1230) d'activation de l'actionneur (114) du dispositif de blocage (106) en réponse à un signal de commande lorsque le levier de sélection (102) se trouve dans la voie principale (108), afin de bloquer le levier de sélection (102) dans la voie principale (108) et/ou une étape (1240) de libération de l'actionneur (114) afin que le levier de sélection (102) puisse être déplacé de la voie principale (108) dans la voie à commande impulsionnelle (110).
